# FASCICULE DE BREVET EUROPEEN

(11) **EP 1 051 095 B1**
(45) Date de publication et mention de la délivrance du brevet: **16.04.2003**
(21) Numéro de dépôt: 99900268.6
(22) Date de dépôt: 26.01.1999
(51) Int. Cl.: A47G 21/18, B29C 57/00

(54) **ELEMENT TUBULAIRE POUR LE PRELEVEMENT DE LIQUIDE ET PROCEDE DE FABRICATION DE CET ELEMENT TUBULAIRE**
ROHRFÖRMIGES ELEMENT ZUR ENTNAHME VON FLÜSSIGKEIT SOWIE VERFAHREN ZU SEINER HERSTELLUNG
TUBULAR ELEMENT FOR LIQUID DRAWING AND METHOD FOR MAKING SAME

(30) Priorité: 27.01.1998 EP 98420015
(43) Date de publication de la demande: 15.11.2000
(73) Titulaire: WALK PAK HOLDING NV, Curaçao (AN)
(72) Inventeur: SUSINI, Etienne, F-94400 Villecresnes (FR)
(74) Mandataire: Savoye, Jean-Paul
(86) Numéro de dépôt international: IB9900128
(87) Numéro de publication internationale: WO99037191

(56) Documents cités:
- DE-U- 29 710 651
- US-A- 2 269 593
- US-A- 5 114 074
- PATENT ABSTRACTS OF JAPAN vol. 097, no. 006, 30 juin 1997 & JP 09 039089 A (TOYO CAP KK), 10 février 1997
- PATENT ABSTRACTS OF JAPAN vol. 007, no. 001 (M-183), 6 janvier 1983 & JP 57 160620 A (TAKEUCHI PRESS KOGYO KK), 4 octobre 1982
- PATENT ABSTRACTS OF JAPAN vol. 011, no. 155 (M-589), 20 mai 1987 & JP 61 286114 A (SHOWA DENKO KK), 16 décembre 1986

## Description

La présente invention se rapporte à un élément tubulaire pour le prélèvement de liquide dans un récipient par application d'une dépression à une de ses extrémités, destiné à passer à travers une ouverture ou un conduit élastiquement extensible d'entrée dudit récipient, la section de cet élément tubulaire étant calibrée pour être jointive avec le bord de cette ouverture ou avec la paroi de ce conduit qui comprend des moyens faisant saillie d'une portion de sa face tubulaire externe et conformés pour permettre le passage de ladite portion à travers ladite ouverture ou ledit conduit de l'extérieur vers l'intérieur du récipient et pour s'opposer à son passage dans le sens opposé.

Il existe de nombreux récipients présentant notamment la forme de sachets utilisés plus particulièrement pour le conditionnement de boissons, prévus pour permettre de consommer la boisson directement à partir du sachet en la prélevant à l'aide d'une paille par aspiration. Ces sachets présentent généralement un problème d'hygiène qui résulte du fait que la paille peut être enlevée et remise dans le sachet, de sorte qu'il y a un risque que l'utilisateur réintroduise une paille souillée dans l'emballage. Ce risque est d'autant plus grand que l'utilisateur est très souvent un enfant et même un très petit enfant pour qui les notions d'hygiène peuvent être vagues.

De plus, l'extrémité de la paille destinée à être introduite dans le sachet est en général coupée en biseau ménageant ainsi une extrémité pointue, pour permettre de perforer un opercule destiné à la fermeture étanche du sachet avant sa première utilisation. En permettant le libre retrait de cette paille du sachet, on prend le risque que l'utilisateur se blesse avec l'extrémité biseautée relativement dure, capable de perforer. Or, de nouveau, ce risque est d'autant plus grand que le sachet est mis entre les mains d'un enfant jeune.

On a déjà proposé dans le DE-U-297 10 651 une paille pour prélever une boisson d'un récipient par aspiration, comprenant un renflement dont la section augmente progressivement et finit en revenant brusquement à la section initiale de la paille. Ainsi, la paille peut être enfoncée à travers une ouverture du récipient, l'un des éléments l'ouverture ou le renflement étant élastiquement déformable, de sorte que la partie avant du renflement dont la section augmente progressivement peut passer à travers l'ouverture. Le rétrécissement brusque du renflement qui est à l'arrière empêche ensuite la paille de ressortir de l'ouverture. L'extrémité avant d'une telle paille étant destinée à être introduite à travers une ouverture fermée par un opercule perforable doit être tranchante, donc biseautée, de sorte que si la paille est arrachée de l'ouverture, ce qui est toujours possible, elle demeure dangereuse.

Une autre solution assez voisine de la précédente a été décrite dans le US 5 114 074, et les mêmes remarques que pour la solution précédente s'appliquent dans ce cas.

Par ailleurs, lorsqu'une telle paille est utilisée avec un sachet contrôlé par une valve formée par un canal ménagé entre deux lignes de soudage réunissant deux films superposés, l'extrémité biseautée coupante de la paille introduite dans ce canal présente le risque d'endommager cette valve suite aux mouvements répétés d'avance et de retrait de la paille destinés à permettre l'ouverture et respectivement la fermeture de cette valve.

Le but de la présente invention est de remédier, au moins en partie, aux inconvénients et aux risques susmentionnés.

A cet effet, cette invention a tout d'abord pour objet un élément tubulaire du type susmentionné, tel que défini par la revendication 1.

Cette invention a également pour objet un procédé de fabrication de cet élément tubulaire tel que défini par la revendication 4.

Selon une forme préférée de l'invention, le renflement annulaire est constitué par une portion d'extrémité de l'élément tubulaire en matériau thermoformable, retournée sur elle-même vers l'extérieur. L'extrémité à surface externe tronconique est formée ensuite sur l'extrémité de cette portion retournée.

L'extrémité de la portion de l'élément tubulaire retournée est ramenée en arrière le long de la paille et forme une portée annulaire à l'extérieur de l'élément tubulaire, servant de butée pour arrêter cet élément tubulaire lorsque l'on veut retirer son renflement annulaire d'une ouverture ou d'un conduit de section correspondant à la section normale de cet élément tubulaire après l'avoir engagé à travers cette ouverture ou ce conduit. Au contraire, la portion tronconique formée à l'avant de ce renflement annulaire permet d'exercer une force centrifuge sur les bords de l'ouverture ou la paroi du conduit formé en un matériau élastiquement extensible pour le dilater et permettre l'introduction de l'élément tubulaire dans le sachet et le resserrement de cette ouverture ou de ce conduit sur cet élément tubulaire, après le passage de son renflement.

Comme on peut s'en rendre compte, la forme d'exécution préférée de l'invention permet de fournir un moyen empêchant efficacement le retrait de l'élément tubulaire, tout en résolvant par la même occasion le problème relatif à l'extrémité coupante de la paille, puisque celle-ci est retournée et que la nouvelle extrémité n'est plus biseautée et n'est donc plus ni pointue, ni coupante, la formation du tronc de cône par moulage à chaud sur la partie retournée de l'élément tubulaire produisant un bord émoussé.

Le dessin annexé illustre, schématiquement et à titre d'exemple, une forme d'exécution de l'élément tubulaire objet de la présente invention et un mode de réalisation de son procédé de fabrication.
La figure 1 est une vue en élévation avec coupe partielle illustrant une première phase du procédé;
la figure 2 est une vue semblable à la figure 1 illustrant la seconde phase du procédé;
la figure 3 est une vue en élévation de l'élément tubulaire obtenu par ce procédé.

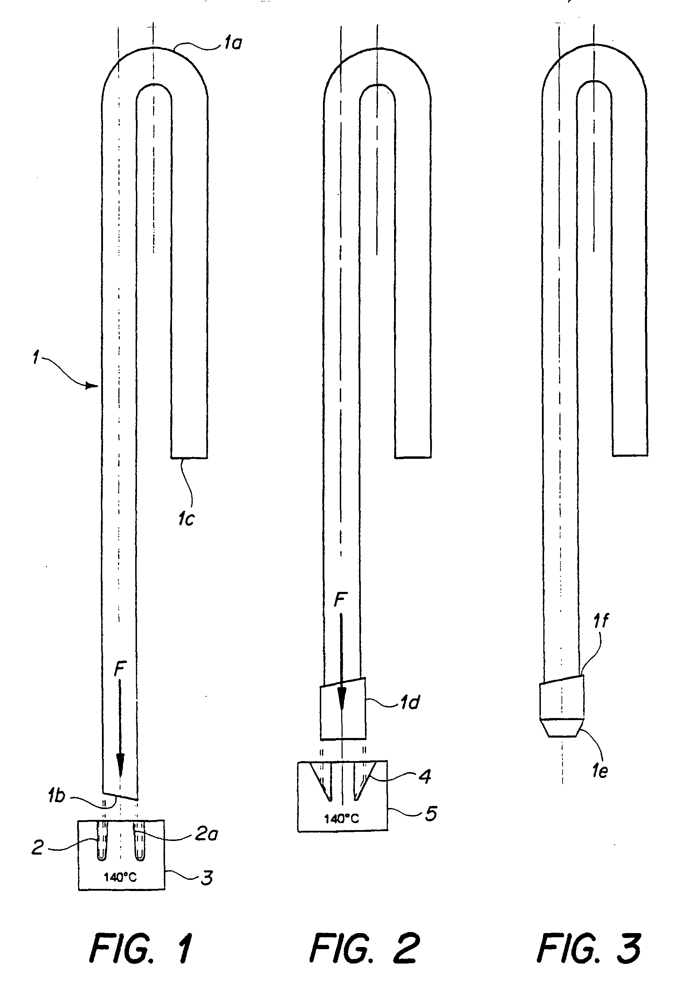

L'élément tubulaire illustré par la figure 1 est une paille 1 en polypropylène dans cet exemple, telle qu'on en trouve dans le commerce, présentant un segment 1a dans lequel est formé un soufflet par formation de plis en accordéon pour permettre de couder la paille à cet endroit. Une extrémité 1b de la paille 1 coupée en biseau, constitue son extrémité de succion destinée normalement à être introduite dans un récipient de conditionnement d'une boisson. On peut toutefois préciser que ce biseau n'est pas nécessaire dans le cas de la présente invention. Toutefois comme ce type de paille est généralement disponible sous cette forme, on a voulu montrer que la présente invention ne nécessite pas de modification de ce type de paille. L'autre extrémité 1c de cette paille 1, par laquelle le liquide est aspiré, constitue l'extrémité de distribution du liquide contenu dans ce récipient.

Pour former le conduit tubulaire objet de la présente invention, l'extrémité biseautée 1b est introduite dans une empreinte annulaire 2 d'un premier moule 3 chauffé, dans le cas du polypropylène utilisé dans cet exemple, à la température de ramollissement de ce matériau qui se situe à environ 140°C. Cette empreinte présente un fond arrondi et une largeur légèrement supérieure au double de l'épaisseur de la paroi de la paille 1. La face annulaire interne 2a de cette empreinte 2 présente une très légère conicité, le plus petit diamètre se trouvant vers l'ouverture de l'empreinte 2 et correspond au diamètre interne de la paille 1.

En introduisant l'extrémité 1b de la paille 1 dans cette empreinte annulaire 2 et en exerçant une légère pression axiale sur la paille dans le sens de la flèche F, le polypropylène se ramollit et se retourne progressivement vers l'extérieur selon la forme de l'empreinte 2. Dès que la partie retournée de la paille 1 formant un renflement annulaire 1d a atteint la longueur désirée, on retire la paille 1 de l'empreinte 2. On constate alors que l'ouverture de succion formée à partir de l'extrémité de succion 1b se trouve dans un plan sensiblement perpendiculaire à l'axe de la paille 1. Non seulement le fait de retourner la matière de l'extrémité de la paille ne la rend plus coupante, mais le fait de ne plus être biseauté réduit encore sa dangerosité potentielle.

On passe alors à la seconde étape du procédé qui consiste à introduire l'extrémité de la paille 1 présentant le renflement annulaire 1d dans une seconde empreinte 4 d'un second moule 5, chauffé à 140°C. La forme de cette seconde empreinte annulaire 4 est formée d'une surface cylindrique interne dont le diamètre correspond au diamètre interne de la paille 1 et d'une surface externe tronconique dont la petite base a, de préférence, un diamètre très légèrement supérieur au diamètre intérieur de la paille 1, d'une valeur correspondant approximativement à l'épaisseur de la paroi de la paille 1.

En introduisant l'extrémité du renflement annulaire 1d de la paille 1 dans cette seconde empreinte annulaire 4 et en exerçant une légère pression dans le sens de la flèche F, on forme une partie tronconique 1e à l'extrémité avant du renflement annulaire 1d (figure 3). La partie arrière du renflement annulaire 1d formée par l'extrémité retournée de la paille 1, ménage une portée arrière 1f entre le renflement annulaire 1d et la paille 1. Cette portée sert de butée destinée à empêcher de ressortir la paille 1 après l'avoir engagée à travers une ouverture ou un conduit calibré à la section de la paille 1 et ménagé dans un matériau élastiquement extensible. Par contre, la partie tronconique le ménagée à l'extrémité avant du renflement 1d permet de dilater la matière de l'ouverture ou du conduit calibré contrôlant l'entrée dans la récipient. Bien entendu, la matière dans laquelle cette ouverture ou ce passage est formé doit avoir une élasticité suffisante pour permettre cette dilatation élastique, pour se resserrer après le passage du renflement 1c et l'empêcher de ressortir. Ce matériau peut avantageusement être à base de polyéthylène.

A titre indicatif, on a introduit une paille selon la présente invention dans un sachet contenant 0,5 litre d'eau et on a fait pénétrer la paille 5 cm au-delà de l'ouverture ou du passage calibré. On a tenu la paille verticalement et on a alors lâché le sachet. Le renflement 1d a permis de retenir le sachet.

Bien entendu, d'autres formes d'exécutions peuvent être imaginées pour atteindre le même résultat, c'est-à-dire permettre l'introduction de la paille dans un sens à travers une ouverture ou un passage calibré au diamètre de la paille, mais l'empêcher de traverser cette même ouverture dans l'autre sens.

C'est ainsi que l'on pourrait imaginer d'utiliser des languettes élastiques réparties angulairement autour de la paille et ménagées par découpage de la paroi de la paille puis déformées par chauffage. De telles solutions ont été étudiées mais ne sont pas considérées comme les plus intéressantes, aussi bien en ce qui concerne leur efficacité que leur coût de fabrication.

Le procédé de fabrication décrit est effectivement simple et rapide à mettre en oeuvre. Par ailleurs, la forme d'exécution décrite permet, comme on l'a vu, non seulement de résoudre le problème de la retenue d'un sachet rempli de 0,5 litre d'eau, mais de supprimer les risques de blessure que présente la paille biseautée. Par conséquent, même si on sort la paille, par exemple une fois le récipient vide en tirant très fortement ou en coupant le sachet, il n'y a pas de risque de se blesser avec l'extrémité de la paille qui se trouvait à l'intérieur du sachet.

## Revendications

1. Elément tubulaire pour le prélèvement de liquide dans un récipient dont une première extrémité (1c) est destinée à être reliée à une source de dépression et dont la seconde extrémité (1b) est destinée à être immergée dans le liquide à prélever, cet élément tubulaire étant destiné à passer à travers une ouverture ou un conduit d'entrée en matière élastiquement extensible dudit récipient, la section de cet élément tubulaire (1) étant calibrée pour être jointive avec le bord de cette ouverture ou avec la paroi de ce conduit, cet élément tubulaire comprenant un renflement annulaire (1d) à surface tronconique (1e) dont la petite base, dirigée vers ladite seconde extrémité (1b), présente un diamètre sensiblement égal au diamètre externe dudit élément tubulaire et dont le diamètre de la grande base permet de définir, avec la surface externe de l'élément tubulaire, une portée (1f) servant de butée d'arrêt avec la paroi du conduit ou de l'ouverture dudit récipient, **caractérisé en ce que** l'orifice de succion de ladite seconde extrémité (1b) de l'élément tubulaire est ménagé à travers la petite base de ladite surface tronconique (1e) dudit renflenent annulaire (1d) et forme un plan sensiblement perpendiculaire à l'axe longitudinal dudit élément tubulaire (1).

2. Elément tubulaire selon la revendication 1, **caractérisé en ce qu'**il est en un matériau thermoformable dans lequel ledit renflement annulaire (1d) est constitué par une portion de l'ouverture de son extrémité de succion (1b) retournée sur elle-même.

3. Elément tubulaire selon l'une des revendications précédentes, **caractérisé en ce qu'**un segment cylindrique est ménagé entre la plus grande base de ladite partie tronconique (1e) et ladite portée (1f) servant de butée d'arrêt.

4. Procédé de fabrication d'un élément tubulaire réalisé en un matériau thermoformable, **caractérisé en ce que** l'on forme une empreinte annulaire (2) de moule (3) conformée pour retourner annulairement une extrémité de la paroi de l'élément tubulaire (1) vers l'extérieur, que l'on chauffe le moule (3) à la température de ramollissement dudit matériau thermoformable de cet élément tubulaire (1), que l'on presse axialement l'extrémité de cet élément tubulaire (1) adjacente à l'extrémité de succion (1b), jusqu'à l'obtention d'un renflement annulaire (1d) de longueur désirée, que l'on forme une seconde empreinte annulaire (4) dont le diamètre interne correspond sensiblement à celui dudit élément tubulaire (1) et dont la face externe est tronconique, que l'on chauffe cette seconde empreinte annulaire (4) puis que l'on presse axialement l'extrémité avant dudit renflement annulaire (1d) dans cette seconde empreinte annulaire (4).

## Patentansprüche

1. Röhrenförmiges Element zur Entnahme von Flüssigkeit in einem Behältnis, dessen erstes Ende (1a) dazu bestimmt ist, mit einer Quelle von Unterdruck verbunden zu werden, und dessen zweites Ende (1b) dazu bestimmt ist, in die zu entnehmende Flüssigkeit eingetaucht zu werden, wobei dieses röhrenförmige Element dazu bestimmt ist, durch eine Öffnung oder einen Eingangskanal aus elastisch aufweitbarem Material des benannten Behältnisses hindurchzutreten, und der Querschnitt dieses röhrenförmigen Elements (1) so eingestellt ist, dass er sich dem Rand dieser Öffnung oder der Wandung dieses Kanals dicht anschliesst, wobei dieses röhrenförmige Element eine ringförmige Wulst (1d) mit kegelstumpfartiger Oberfläche (1e) umfasst, dessen kleine Grundfläche, die dem benannten zweiten Ende (1b) zugewandt ist, einen Durchmesser aufweist, der im Wesentlichen gleich dem Aussendurchmesser des benannten röhrenförmigen Elements ist und dessen grosse Grundfläche einen Durchmesser hat, der es gestattet, zusammen mit der Aussenseite des röhrenförmigen Elements eine Auflagefläche (1f) zu definieren, die als Anschlag mit der Wandung des Kanals oder der Öffnung des benannten Behältnisses dient, **dadurch gekennzeichnet, dass** die Ansaugöffnung des benannten zweiten Endes (1b) des röhrenförmigen Elements durch die kleine Grundfläche der benannten kegelstumpfartigen Oberfläche (1e) der benannten ringförmigen Wulst (1d) geführt ist und eine zur Längsachse des benannten röhrenförmigen Elements (1) im Wesentlichen senkrechte Ebene bildet.

2. Röhrenförmiges Element gemäss Anspruch 1, **dadurch gekennzeichnet, dass** es aus einem heissverformbaren Material besteht, in dem die benannte ringförmige Wulst (1d) aus einem Abschnitt der Öffnung seines Ansaug-endes (1b), der auf sich selbst zurückgeschlagen ist, besteht.

3. Röhrenförmiges Element gemäss einem der vorangehenden Ansprüche, **dadurch gekennzeichnet, dass** ein zylindrisches Segment zwischen der grösseren Grundfläche des benannten kegelstumpfartigen Teils (1e) und der benannten, als Anschlag dienenden Auflagefläche (1f) ausgespart ist.

4. Verfahren der Herstellung eines aus einem heissverformbaren Material gefertigten röhrenförmigen Elements, **dadurch gekennzeichnet, dass** man einen ringförmigen Matrizenhohlraum (2) in einem Werkzeug (3) bildet, der so gestaltet ist, dass er ein Ende der Wandung des ringförmigen Elements (1) ringförmig nach aussen kehrt, dass man das Werkzeug (3) auf die Erweichungstemperatur des benannten heissverformbaren Materials dieses röhrenförmigen Elements (1) erwärmt, dass man das Ende dieses röhrenförmigen Elements (1), das dem Ansaug-ende (1b) benachbart ist, axial drückt, bis eine ringförmige Wulst (1d) der gewünschten Länge erhalten wird, dass man einen zweiten ringförmigen Matrizenhohlraum (4) bildet, dessen Innendurchmesser im Wesentlichen dem des benannten röhrenförmigen Elements (1) entspricht und dessen Aussenseite kegelstumpfartig ist, dass man diese zweite ringförmige Matrize (4) aufheizt und dann das vordere Ende der benannten ringförmigen Wulst (1d) axial in diese zweite ringförmige Matrize (4) drückt.

## Claims

1. Tubular element for drawing liquid from a container, of which a first end (1c) is designed to be connected to a source of vacuum and of which the second end (1b) is designed to be immersed in the liquid to be drawn, this tubular element being designed to pass through an orifice or an inlet conduit, made from elastically extendable material, of the said container, the cross section of this tubular element (1) being sized to be contiguous with the edge of this orifice or with the wall of this conduit, this tubular element comprising an annular bulge (1d) with a truncated cone shaped surface (1e) of which the small base, which is directed towards the said second end (1b), has a diameter substantially equal to the external diameter of the said tubular element and of which the diameter of the large base makes it possible, with the external surface of the tubular element, to define a bearing surface (1f), serving as an end stop with the conduit wall or the aperture of the said container, **characterized in that** the suction orifice of the said second end (1b) of the tubular element is made through the small base of the said truncated cone shaped surface (1e) of the said annular bulge (1d) and forms a plane substantially perpendicular to the longitudinal axis of the said tubular element (1).

2. Tubular element according to Claim 1, **characterized in that** it is made from a thermoformable material in which the said annular bulge (1d) is made by turning a portion of the orifice at its suction end (1b) back on itself.

3. Tubular element according to one of the preceding claims, **characterized in that** a cylindrical segment is formed between the larger base of the said truncated cone shaped part (1e) and the said bearing surface (1f) serving as an end stop.

4. Process for manufacturing a tubular element made from a thermoformable material, **characterized in that** an annular imprint (2) of a mould (3) is made, this imprint being shaped to turn back one end of the wall of the tubular element (1) in an annular way towards the outside, **in that** the mould (3) is heated to the softening temperature of the said thermoformable material of this tubular element (1), **in that** the end of this tubular element (1) adjacent to the suction end (1b) is pressed axially, until an annular bulge (1d) of the desired length is obtained, **in that** a second annular imprint (4) is made whose internal diameter corresponds substantially to that of the said tubular element (1) and of which the external surface is in the shape of a truncated cone, **in that** this second annular imprint (4) is heated, and then **in that** the front end of the said annular bulge (1d) is pressed axially into this second annular imprint (4).
